(19) Europäisches Patentamt
European Patent Office
Office européen des brevets

(11) Publication number: 0 152 129 B1

# (12) EUROPEAN PATENT SPECIFICATION

(45) Date of publication of patent specification: 12.06.91

(51) Int. Cl.5: C07C 259/00, C07C 239/14, C07C 239/18, C07C 239/20, A01N 37/46, A01N 47/24

(21) Application number: 85200064.5

(22) Date of filing: 22.01.85

The file contains technical information submitted after the application was filed and not included in this specification

## (54) N-acyl amino acid derivatives, their preparation and their use as fungicides.

(30) Priority: 13.02.84 GB 8403725

(43) Date of publication of application: 21.08.85 Bulletin 85/34

(45) Publication of the grant of the patent: 12.06.91 Bulletin 91/24

(84) Designated Contracting States: AT BE CH DE FR GB IT LI LU NL SE

(56) References cited:
EP-A- 57 027

BULLETIN OF THE CHEMICAL SOCIETY OF JAPAN, vol. 54, no. 4, April 1981, pages 1137-1142, The Chemical Society of Japan, Tokyo, JP; C.-g. SHIN et al.: "Alpha-beta-unsaturated carboxylic acid derivatives. XIX. The convenient synthesis of alpha-alkoxy-, alpha-hydroxy-alpha-amino acid, and its cyclic dipeptide from alpha-dehydroamino acid"

(73) Proprietor: SHELL INTERNATIONALE RESEARCH MAATSCHAPPIJ B.V.
Carel van Bylandtlaan 30
NL-2596 HR Den Haag(NL)

(72) Inventor: Ten Haken, Pieter
Konkelboet The Street
Eastling Nr. Faversham Kent(GB)
Inventor: Armitage, Brian Philip
14 Combe Drive
Sittingbourne Kent(GB)
Inventor: Naisby, Thomas Webster
51 Clive Road
Sittingbourne Kent(GB)
Inventor: Gray, Andrew Clement Gripper
14 London Road
Faversham Kent(GB)

(74) Representative: Bennett, David Arthur Horder et al
4, York Road
London SE1 7NA(GB)

EP 0 152 129 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

RECUEIL, JOURNAL OF THE ROYAL NETHERLANDS CHEMICAL SOCIETY, vol. 100, no. 2, February 1981, pages 73-78, Den Haag, NL; J.D.M. HERSCHEID et al.: "Synthesis of dehydroamino acids and didehydrodioxopiperazines and their conversion into alpha-mercapto-alpha-amino acid derivatives"

BULLETIN OF THE CHEMICAL SOCIETY OF JAPAN, vol. 47, no. 12, December 1974, pages 3109-3113, Tokyo, JP; C.-g. SHIN et al.: "Alpha-beta-unsaturated carboxylic acid derivatives. VI. New synthesis of N-acyl-alpha dehydroamino acid esters"

JOURNAL OF THE AMERICAN CHEMICAL SOCIETY, vol. 97, no. 17, 20th August 1975, pages 5008-5010, Washington D.C., US; S.-i. NAKATSUKA et al.: "Biogenetic-type synthesis of penicillin-cephalosporin antibiotics. I. A stereocontrolled synthesis of the penam- and cephem-ring systems from an acyclic tripeptide equivalent"

## Description

This invention relates to N-acyl amino acid derivatives, to a process for their preparation, and to use of such derivatives as fungicides.

Bull. Chem. Soc. Jpn., 54, 1137-1142 (1981) discloses t-butyl 2-(N,O-diacetyl-hydroxyamino)-butanoate and t-butyl 2-(N,O-diacetyl-hydroxyamino)pentanoate, Recueil, Journal of the Royal Netherlands Chemical Society, 100, No. 2, 73-78 (1981) discloses ethyl 2-(N,O-diacetyl-hydroxyamino)-propanoate, ethyl 2-(N,O-diacetyl-hydroxyamino)butanoate, ethyl 2-(N,O-diacetyl-hydroxyamino)-3-phenylpropanoate and ethyl 2-(N,O-diacetyl-hydroxyamino)-3-methylbutanoate, Bull. Chem. Soc. Jpn., 47, 3109-3113 (1974) discloses t-butyl 2-(N,O-diacetyl-hydroxyamino)pentanoate and t-butyl 2-(N,O-dipropanoyl-hydroxyamino)pentanoate and J. Amer. Chem. Soc., 97, No 17, 5008-5010 (1975) discloses t-butyl 2-(N,O-diacetyl-hydroxyamino)-propanoate. However, there is no indication in any of these documents that any of these compounds exhibit fungicidal activity.

European Patent Application Publication No. 57 027 discloses fungicidal compositions containing, as active ingredient, compounds of general formula

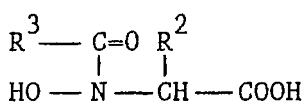
(II)

and salts and esters thereof wherein $R^2$ represents an optionally substituted alkyl, cycloalkyl or aryl group and $R^3$ represents a hydrogen atom or an optionally substituted alkyl, cycloalkyl or aryl group. Compounds of formula II, which are N-acyl amino acid derivatives, may be prepared as described in EP-A-57027 or in J. Biol. Chem. 1963, 283, No. 12, p. 3999 or by procedures such as described in US Patent No. 3,154,578 or obvious modifications thereof.

There has now been discovered a class of N-acyl amino acid derivatives, some of which are novel, having useful fungicidal activity.

According to the present invention there is provided a fungicidal composition which comprises at least two carriers, at least one of which is a surface-active agent, and, as active ingredient, an N-acyl amino acid derivative of general formula

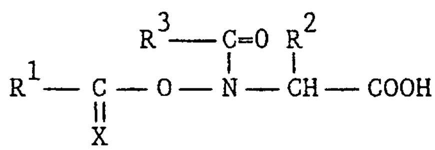
(I)

or a salt or ester thereof, wherein X represents an oxygen or sulphur atom, $R^1$ is an optionally substituted alkyl, alkenyl, cycloalkyl, aryl or aralkyl group or an optionally substituted alkylamino, cycloalkylamino, arylamino or aralkylamino group, $R^2$ is an optionally substituted alkyl, cycloalkyl or aryl group and $R^3$ is a hydrogen atom or an optionally substituted alkyl, cycloalkyl or aryl group.

Optional substituents include halogen atoms and alkyl, alkoxy, haloalkyl, haloalkoxy, hydroxy, cyano, nitro, amino, carboxy, alkoxycarbonyl, phenyl and phenoxy groups, any alkyl moiety present preferably having up to 4 carbon atoms.

In respect of $R^2$ and $R^3$ , an alkyl group preferably has up to 6, especially up to 4, carbon atoms; an aryl group is preferably a phenyl group; and a cycloalkyl group preferably has from 3 to 6 carbon atoms.

$R^2$ is preferably a methyl group. $R^3$ is preferably a hydrogen atom.

Preferably X is an oxygen atom.

In respect of $R^1$, conveniently an alkyl or haloalkyl group may have up to 20 carbon atoms, an alkenyl group 2 to 10 carbon atoms, a cycloalkyl group 3 to 10 carbon atoms, an aryl group is phenyl and an aralkyl group is benzyl.

Preferably, $R^1$ is a $C_{1-20}$ alkyl or haloalkyl group, a $C_{2-10}$ alkenyl group, a $C_{3-8}$ alkoxycarbonylalkyl group, a $C_{3-8}$ cycloalkyl group or a phenyl or benzyl group optionally substituted by one or more substituents independently selected from $C_{1-4}$ alkyl, $C_{1-4}$ alkoxy, halogen, and nitro moieties, or a $C_{1-6}$ alkylamino group, a $C_{3-8}$ cycloalkyl amino group, a phenylamino group optionally substituted by one or more substituents independently selected from $C_{1-4}$ alkyl, $C_{1-4}$ alkoxy, halogen and nitro moieties or a $C_{3-8}$ alkoxycarbonylalkylamino group.

Advantageously, $R^1$ is a $C_{1-10}$ alkyl or haloalkyl group wherein when the alkyl group contains 4 to 10 carbon atoms, the alpha-carbon atom is a tertiary carbon atom attached to the $C=X$ group and three alkyl groups, or is a linear $C_{11-20}$ alkyl group, a $C_{3-8}$ alkenyl group, a cyclohexyl group, an ethoxycarbonylethyl group, a phenyl, trimethylphenyl or benzyl group, or a methylamino, cyclohexylamino, phenylamino, chloroor nitrophenylamino or ethoxycarbonylmethylamino group.

When $R^1$ is an alkyl group it is preferably a $C_{1-5}$ alkyl group.

Typical metal salts of derivatives of formula I are the alkali metal salts, e.g. lithium, sodium and potassium salts.

Typical non-metal salts include ammonium salts, for example those in which the cation has the formula $\overset{+}{N}R^4R^5R^6R^7$ in which each of $R^4$, $R^5$, $R^6$ and $R^7$ independently represents a hydrogen atom or an optionally substituted alkyl, cycloalkyl or aryl group having up to 12 carbon atoms. Optional substituents include halogen atoms and alkyl, alkoxy, haloalkyl, haloalkoxy, hydroxy, cyano, nitro, amino, carboxy, alkoxycarbonyl, phenyl, and phenoxy groups, any alkyl moiety present preferably having up to 4 carbon atoms. Isopropylammonium is an example of a suitable such cation.

Further suitable ammonium salts include those in which the nitrogen atom forms part of a saturated or unsaturated ring, which may also contain one or more additional hetero-atoms, especially nitrogen, oxygen and/or sulphur atoms. Typical salts of this type are pyridinium, pyrrolidinium, piperidinium and morpholinium salts.

Further suitable salts include those with polymeric substances containing basic groups, such as ion exchange resins. Such salts can be especially useful in applications where insoluble materials are required.

Preferred esters of derivatives of formula I are unsubstituted alkyl esters preferably having up to 4 carbon atoms in the alkyl moiety, especially t-butyl esters, and substituted or unsubstituted benzyl esters, e.g. p-nitrobenzyl esters.

A derivative according to the invention may advantageously be in the form of the free acid or the sodium salt.

It will be appreciated that the compounds of formula I contain an asymmetric carbon atom at the 2 position and hence will exist in two optically isomeric forms, which will not necessarily have equal fungicidal activity. Individual optical isomers, together with mixtures of isomers, such as racemic mixtures, are included within the scope of this invention.

The present invention also provides an N-acyl amino acid derivative of the general formula I or a salt or ester thereof in which X, $R^1$ and $R^2$ are as defined above and $R^3$ is a hydrogen atom or an optionally substituted cycloalkyl or aryl group.

The present invention further provides a process for the preparation of a derivative of formula I as defined in the preceding paragraph or a salt or ester thereof, which comprises reacting a compound of general formula

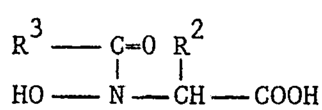

(II)

or a salt or ester thereof, wherein $R^2$ and $R^3$ are as defined in the preceding paragraph with a compound of formula

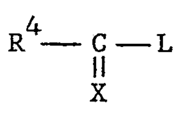

(III) or $R^4-N=C=X$ (IV)

wherein X is as defined above, $R^4$ is an optionally substituted alkyl, cycloalkyl, aryl or aralkyl group and L is a suitable leaving group, and optionally converting the resulting acid, salt or ester into another acid, salt or ester, in known manner.

Compounds of formula III are acyl or thioacyl derivatives and are either known compounds or are obtainable by analogous processes to those for preparing known compounds. L in formula III may conveniently be a chlorine or bromine atom or a group of formula

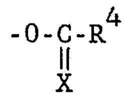 (V)

where X and $R^4$ are as defined above. When L is a group of formula V, the two moieties $R^4$ may be the same or different.

Compounds of formula IV are isocyanates or isothiocyanates.

The process of the invention may be effected in the presence of a solvent. Suitable solvents include ethers, such as ether (diethyl ether) and 1,2-dimethoxyethane, and haloalkanes, such as methylene chloride. Reaction may conveniently be effected at temperatures in the range from -20°C through ambient temperature to 100°C.

If it is desired to prepare a single optical isomer of the required compound, this may be done by using as starting material the appropriate optical isomer of the compound of formula II.

A composition according to the invention preferably contains from 0.5 to 95% by weight of active ingredient.

A carrier in a composition according to the invention is any material with which the active ingredient is formulated to facilitate application to the locus to be treated, which may for example be a plant, seed or soil, or to facilitate storage, transport or handling. A carrier may be a solid or a liquid, including a material which is normally gaseous but which has been compressed to form a liquid, and any of the carriers normally used in formulating fungicidal compositions may be used.

Suitable solid carriers include natural silicas such as diatomaceous earths; magnesium silicates, for example talcs; magnesium aluminum silicates, for example attapulgites and vermiculites; aluminium silicates, for example kaolinites, montmorillonites and micas; calcium carbonate; calcium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; ketones, for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Fungicidal compositions are often formulated and transported in a concentrated form which is subsequently diluted by the user before application. The presence of small amounts of a carrier which is a surface-active agent facilitates this process of dilution.

Of particular interest in enhancing the duration of the protectant activity of the compounds of this invention is the use of a carrier which will provide a slow release of the fungicidal compounds into the environment of the plant which is to be protected. Such slow-release formulations could, for example, be inserted in the soil adjacent to the roots of a vine plant, or could include an adhesive component enabling them to be applied directly to the stem of a vine plant.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenolos, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 or 75%w of active ingredient and usually contain, in addition to solid inert carrier, 3-10%w of a dispersing agent and, where necessary, 0-10%w of stabiliser(s) and/or other additives such as penetrants or stickers. Dusts are usually formulated as a dust concentrate having a similar composition to that of a wettable powder but without a dispersant, and may be diluted in the field with further solid carrier

to give a composition usually containing ½-10%w of active ingredient. Granules are usually prepared to have a size between 10 and 100 BS mesh (1.676-0.152mm), and may be manufactured by agglomeration or impregnation techniques.

Generally, granules will contain ½-25%w active ingredient and 0-10%w of additives such as stabilisers, slow release modifiers and binding agents. Emulsifiable concentrates usually contain, in addition to a solvent and, when necessary, co-solvent, 1-50%w/v active ingredient, 2-20%w/v emulsifiers and 0-20%/v of other additives such as stabilisers, penetrants and corrosion inhibitors. Suspension concentrates are usually compounded so as to obtain a stable, non-sedimenting flowable product and usually contain 10-75%w of suspending agents such as protective colloids and thixotropic agents, 0-10%w of other additives such as defoamers, corrosion inhibitors, stabilisers penetrants and stickers, and water or an organic liquid in which the active ingredient is substantially insoluble; certain organic solids or inorganic salts may be present dissolved in the formulation to assist in preventing sedimentation or as antifreeze agents for water.

The compositions may also contain other ingredients, for example other compounds possessing pesticidal, especially insecticidal, acaricidal, herbicidal or fungicidal, properties.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The invention still further provides the use as a fungicide of a derivative of the general formula I or a salt or an ester thereof as defined above, and a method for combating fungus at a locus, which comprises treating the locus, which may for example be plants subject to or subjected to fungal attack, seeds of such plants or the medium in which such plants are growing or are to be grown, with such a derivative.

The present invention is of wide applicability in the protection of crop plants against fungal attack. Typical crops which may be protected include vines, tobacco, potato, tomato lettuce and cocoa. The present invention is of particular value in the protection of vines against fungal disease, such as downy mildew, Plasmopara viticola, because of the ability of the active compounds to provide a protective effect in those parts of the vine plant romote from the site of application. Thus, if the upper surfaces of leaves of a vine are sprayed, the plant becomes more resistant to fungal attack not only on the leaf undersurfaces (translaminar protection) but also on the plant surfaces emerging after the treatment. The active material may also be effective when applied to the stem or roots of the plant(s) to be protected. The duration of such protection is normally dependent on the individual compound selected, and also a variety of external factors, such as climate, whose impact is normally mitigated by the use of a suitable formulation.

The invention will be further understood from the following Examples.

Example 1

**Preparation of N-formyl N-pivaloyloxy alpha-alanine**

0.75 mol of N-hydroxy N-formyl alpha-alanine, sodium salt was suspended in 1 litre of 1,2 dimethoxy ethane. 0.75 mol of pivaloyl chloride was added over 10 minutes. The suspension was stirred for 24 hours, the sodium chloride filtered off and the solvent removed under reduced pressure. The resulting white solid was treated with 30-40 petrol, filtered, and washed with ether to give 0.50 mol of the title compound as a white solid mp. 130-132°C.
Yield = 66.3%

| | | | | |
|---|---|---|---|---|
| Analysis | Theory | 49.8C | 6.9H | 6.4N |
| | Found | 49.4C | 6.8H | 6.4N |

Example 2

**Preparation of N-formyl N-pivaloyloxy alpha-alanine, sodium salt**

0.005 mol of the product of Example 1 was suspended in water, and 0.005 mol of sodium bicarbonate in a little water was added. The water was immediately evaporated under reduced pressure at ambient temperature (20°C), and the last traces of water removed by repeated dissolution in ethanol and

evaporation. The resulting oil dissolved in acetone, and treated with ether. The crystalline solid which precipitated out was washed with a little acetone and dried to give the title compound.
Yield = 84%

| | | | | | |
|---|---|---|---|---|---|
| Analysis | Theory | 45.2C | 5.9H | 5.9N |
| | Found | 44.5C | 5.9H | 5.7N |

Example 3

**Preparation of N-benzoyloxy N-formyl alpha-alanine**

0.03 mol of N-hydroxy N-formyl alpha-alanine was dissolved in 25ml of dry 1,2 dimethoxy ethane. 0.06 mol of benzoic anhydride was added. The solution was allowed to stand for several days. The solvent was evaporated off and the crude product chromatographed over silica gel. 0.0156 mol of the title compound in the form of a viscous pale yellow oil was obtained.
Yield - 52%

| | | | | |
|---|---|---|---|---|
| Analysis | Theory | 55.7C | 4.6H | 5.9N |
| | Found | 54.0C | 4.9H | 5.2N |

Example 4

N-benzoyloxy N-formyl alpha-alanine, sodium salt was prepared from the product of Example 3 by a process similar to that of Example 2.

Example 5

**Preparation of N-formyl N-phenylacetoxy alpha-alanine**

0.03 mol of phenyl acetic acid was treated with 8g (excess) of trifluoroacetic anhydride in dry methylene chloride. After 2 hours the solvent and excess trifluoroacetic anhydride were removed (evaporated) and the residue was dissolved in fresh methylene chloride and added to 0.03 mol of N-formyl N-hydroxy alpha-alanine.

After stirring for 2 days at ambient temperature (20 °C), the solvent was evaporated and the products chromatographed. 1.1g of the acylated amino acid title product was obtained as a solid, mp. 105 °C.
Yield - 15%

| | | | | |
|---|---|---|---|---|
| Analysis | Theory | 57.4C | 5.2H | 5.6N |
| | Found | 56.9C | 5.2H | 5.6N |

Example 6

Preparation of N-(2,2-dimethylbutanoyloxy) N-formyl alpha alanine

0.03 mol of N-formyl N-hydroxy alpha-alanine was dissolved in 40ml of dry 1,2 dimethoxy ethane; 0.03 mol of tributylamine was added and the solution cooled to -20 °C. 0.03 mol of neohexanoyl chloride was added, the suspension allowed to warm up and stir overnight. The solvent was removed, ether was added and the solution was washed with a small volume of water. The colourless solution was dried, stripped, treated with charcoal and title product was crystallised out as a white solid, separated off and washed with

30-40 petrol, 0.015 mol, mp. 85-90 °C.
Yield = 50.1%

| Analysis | | | | |
|---|---|---|---|---|
| | Theory | 51.9C | 7.4H | 6.1N |
| | Found | 51.7C | 8.1H | 6.2N |

Example 7

**Preparation of N-formyl N-(p-nitrophenylcarbamoyloxy) alpha-alanine**

N-formyl-N-hydroxyalanine (10 mmol) in 1,2-dimethoxyethane (10ml) was treated with p-nitrophenyl isocyanate (12 mmol). The reaction mixture was allowed to stand at ambient temperature for one hour. After removal of solvent, under reduced pressure, methylene chloride (10ml) was added and the yellow precipitate which formed was filtered off to give the title product, mp. 138-140 °C.
Yield = 65%

| Analysis | | | | |
|---|---|---|---|---|
| | Theory | 44.5C | 3.7H | 14.15N |
| | Found | 43.2C | 3.6H | 13.4N |

Example 8

**Preparation of N-formyl N-methylcarbamoyloxy alpha-alanine, tertiary butyl ester**

N-formyl-N-hydroxyalanine-t-butyl ester (10 mmol) in dry ether (30ml) was treated with methyl isocyanate (12mmol). The reaction mixture was stirred overnight at room temperature, and subsequently evaporated to dryness to yield the title product as a light yellow oil.
Yield = 100%

| Analysis | | | | |
|---|---|---|---|---|
| | Theory | 46.9C | 7.3H | 11.4N |
| | Found | 47.3C | 7.3H | 10.9N |

Example 9

**Preparation of N-formyl N-methylcarbamoyloxy alpha-alanine**

N-formyl-N-methylcarbamoyloxyalanine-t-butyl ester (6.5 mmol) in ethylene chloride (10ml) was treated with trifluoroacetic acid (5ml). The reaction mixture was stirred at room temperature for one hour and then evaporated under reduced pressure at ambient temperature. The resulting yellow oil was dissolved in methylene chloride and after about 10 minutes product crystallised out. The white fluffy crystals were filtered off and washed with ether to give the title product, mp. 117-120 °C.
Yield = 65%

| Analysis | | | | |
|---|---|---|---|---|
| | Theory | 37.9C | 5.25H | 14.7N |
| | Found | 37.5C | 5.2H | 14.5N |

Example 10

**Preparation of N-formyl N-cyclohexylcarbamoyloxy alpha-alanine**

N-formyl-N-hydroxyalanine-t-butyl ester (10mmol) in dry ether (20ml) was treated with cyclohexyl isocyanate (12mmol) and two drops of triethylamine. The reaction mixture was stirred overnight at ambient temperature. The solvent was removed under reduced pressure to give a 100% yield of light yellow oil. Without further purification a portion of this product (5ml) and methylene chloride (10ml) was treated with trifluoroacetic acid (5ml) and the reaction mixture stirred at ambient temperature for one hour. The solvent was removed under reduced pressure and the solid obtained was filtered and washed with ether to give the title product, mp. 136-137° C.
Yield = 85%

| | | | | |
|---|---|---|---|---|
| Analysis | Theory | 51.1C | 7.0H | 10.8N |
| | Found | 51.1C | 6.8H | 10.8N |

Example 11

**Preparation of (N-ethoxycarbonylmethylcarbamoyloxy)N-formyl alpha-alanine**

Ethoxycarbonylmethyl isocyanate (10mmol) was mixed with N-formyl N-hydroxy alpha-alanine, t-butyl ester (10mmol) in ether (20ml) at ambient temperature. After 18 hours the solvent was removed and the product purified by flash chromatography. A pale yellow oil obtained in 86% yield (N-ethoxycarbonylmethylcarbamoyl N-formyl N-hydroxy alpha-alanine, t-butyl ester)

| | | | | |
|---|---|---|---|---|
| Analysis | Theory (as mono hydrate) | 46.4C | 7.2H | 8.3N |
| | Found | 46.2C | 6.9H | 8.1N |

The tertiary butyl ester (5mmol) was dissolved in methylene chloride (10ml) and excess trifluoroacetic acid (5ml) was added. The resulting solution was stirred at ambient temperature for 18 hours, and the solvent was then evaporated off to give the title product as an oil. Yield = 66%

| | | | | |
|---|---|---|---|---|
| Analysis | Theory (as 1.5 $H_2O$) | 37.4C | 5.9H | 9.7N |
| | Found | 37.6C | 5.3H | 9.6N |

Example 12

**Preparation of N-acetoxy N-formyl alpha-alanine**

8g (0.06mol)of N-formyl N-hydroxy alpha-alanine was dissolved in 50ml of 1,2-dimethoxyethane and 7.5g (0.075mol) of acetic anhydride was added. After 24 hours at ambient temperature reaction was complete and volatiles were removed *in vacuo* at ambient temperature over 48 hours to yield the title product.
Yield = 95%

| | | | | |
|---|---|---|---|---|
| Analysis | Theory | 41.4C | 5.1H | 8.0N |
| | Found | 41.2C | 5.3H | 7.4N |

Example 13

**Preparation of N-formyl N-phenylcarbamoyloxy alpha-alanine**

N-formyl N-hydroxy alpha-alanine (0.02mol) in 1,2-dimethoxyethane (50ml) was treated with phenyl isocyanate (0.021mol) at ambient temperature and the resulting mixture was heated on a steam bath for five minutes and subsequently stirred for 5 hours at ambient temperature. Volatiles were evaporated off, methylene chloride (50ml) was added and the resulting solution was stored in deep freeze (-18° C) for 16 hours. Diphenyl urea by-product precipitated out and was filtered off and the filtrate was evaporated to dryness leaving a white crystalline residue which was washed liberally to give the title product, mp. 124-126° C.
Yield = 30%

| | | | | |
|---|---|---|---|---|
| Analysis | Theory | 52.4C | 4.8H | 11.1N |
| | Found | 52.1C | 4.9H | 11.0N |

Example 14

**Preparation of N(2-chlorophenylcarbamoyloxy) N-formyl alpha-alanine**

N-formyl N-hydroxy alanine (0.02mol) in 1,2-dimethoxyethane (50ml) was treated with 2-chlorophenyl isocyanate (0.021mol) and the resulting mixture was stirred for 5 hours at ambient temperature. Volatiles were evaporated off, ether (50ml) was added, and to the resulting solution was added 40-60 petrol until the solution just turned cloudy. After standing for 16 hours in deep freeze (-18° C), white crystals which precipitated out were filtered off, washed liberally with methylene chloride and dried to give the title product, mp. 116-119° C.
Yield = 30%

| | | | | |
|---|---|---|---|---|
| Analysis | Theory | 46.1C | 3.9H | 9.8N |
| | Found | 46.2C | 3.8H | 10.0N |

Example 15

Preparation of N-formyl N-pivaloyloxy alpha alanine, isopropylamine salt

0.02mol of the product of Example 1 was dissolved in 50ml of dry 1,2-dimethoxyethane, and 0.02mol of isopropylamine was added. The dimethoxyethane was evaporated off under reduced pressure yielding a yellow oil which slowly solidified. The solid was washed with 30-40 petroleum ether, filtered off and dried to give the title compound as a white solid, mp. 107-108° C.
Yield = 96%

| | | | | |
|---|---|---|---|---|
| Analysis | Theory | 52.2 C | 8.7 H | 10.1 N |
| | Found | 52.0 C | 8.8 H | 10.0 N |

Example 16

**Preparation of N-formyl N-pivaloyloxy alpha-alanine, benzyl ester**

0.05mol of the product of Example 1 and 20ml of thionyl chloride were heated together under reflux for 10 minutes. When dissolution was complete, excess thionyl chloride was evaporated off. 0.02mol of the resulting acid chloride product was dissolved in 50ml dry diethylether and 0.02mol of 1-methylimidazole

was added dropwise with stirring at -30 ° C. To the resulting stirred suspension at -30 ° C was added 0.02mol of benzyl alcohol. Stirring was continued for 60 hours at ambient temperature (20 ° C). The resulting ether solution was decanted from the brown solid residue formed. The solution was evaporated leaving a yellow oil which was chromatographed to yield the title product as an oil.
Yield = 40%.

| | | | | |
|---|---|---|---|---|
| <u>Analysis</u> | Theory | 62.5 C | 6.8 H | 4.6 N |
| | Found | 62.1 C | 6.8 H | 4.5 N |

<u>Example 17 to 26</u>

Following procedures similar to that of Example 1 (or in the case of Example 26, that of Example 16), there were prepared a number of additional compounds as defined in Table I following by reference to the formula

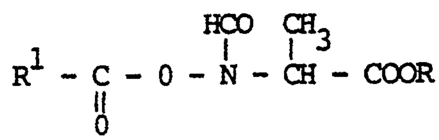

| Example | $R^1$ | R | M.p. °C | Yield % | Analysis % | | | |
|---|---|---|---|---|---|---|---|---|
| | | | | | | C | H | N |
| 17 | cyclohexyl | H | 100 | 25 | Theory<br>Found | 54.3<br>53.3 | 7.0<br>7.1 | 5.8<br>5.7 |
| 18 | 2,4,6-trimethylphenyl | H | 74 | 18 | Theory<br>Found | 60.2<br>59.1 | 6.1<br>6.1 | 5.0<br>4.5 |
| 19 | $CH_3(CH_2)_{10}$- | H | 51 | 53 | Theory<br>Found | 61.0<br>61.3 | 9.2<br>9.0 | 4.4<br>4.3 |
| 20 | $CH_3(CH_2)_{14}$- | H | 67 | 43 | Theory<br>Found | 64.7<br>64.7 | 10.0<br>10.3 | 3.8<br>3.8 |
| 21 | $CH_3(CH_2)_{16}$- | H | 73 | 51 | Theory<br>Found | 66.2<br>66.0 | 10.3<br>10.5 | 3.5<br>3.5 |
| 22 | $(CH_3CH_2)_2$-<br>$(CH_3)C$= | H | 66 | 21 | Theory<br>Found | 53.9<br>53.8 | 7.8<br>7.9 | 5.7<br>5.7 |
| 23 | $C_2H_5O.CO.$<br>$(CH_2)_2$- | H | oil | 40 | Theory<br>Found | 4.6<br>45.6 | 5.8<br>6.2 | 5.4<br>4.9 |
| 24 | $(ClCH_2)$<br>$(CH_3)_2C$- | H | 109 | 46 | Theory<br>Found | 42.9<br>42.8 | 5.6<br>5.9 | 5.6<br>5.6 |
| 25 | $(CH_3)_2C$=CH- | H | 89 | 51 | Theory<br>Found | 50.2<br>50.0 | 6.1<br>6.1 | 6.5<br>6.6 |
| 26 | $(CH_3)_3C$- | p-nitrobenzyl | oil | 34 | Theory<br>Found | 54.5<br>53.9 | 5.7<br>5.9 | 7.9<br>7.6 |

Example 27

The fungicidal activity of compounds of the invention was investigated by means of the following tests.

a) Antisporulant activity against vine downy mildew (Plasmopara viticola; P.v.a)

The test is a direct antisporulant one using a foliar spray. The lower surfaces of leaves of whole vine plants (cv Cabernet Sauvignon) are inoculated by spraying with an aqueous suspension containing $10^4$ zoosporangia/ml 2 days prior to treatment with the test compound. The inoculated plants are kept for 24 hours in a humidity compartment, and then 24 hours at glasshouse ambient temperature and humidity. When the plants are dry, infected leaves are sprayed on their lower surfaces with a solution of active material in 1:1 water/acetone containing 0.04% w/w "Triton X-155" (trade mark) (an octylphenol polyethoxylate surfactant). The spraying is carried out with a moving track sprayer which delivers 620 1/ha, and the concentration of active material is calculated to give an application rate of 1kg/ha. After spraying, the plants are returned to normal glasshouse conditions for 96 hours and are then transferred to the high humidity compartment for 24 hours to induce sporulation, prior to assessment. Assessment is visual and is based on the percentage of the leaf area covered by sporulation compared with that on control leaves.

b) Translaminar activity against vine downy mildew (Plasmopara viticola; P.v.t)

The test is a translaminar protectant one using a foliar spray. The upper surfaces of leaves of whole vine plants are sprayed at a dosage of 1 kilogram of active material per hectare using a track sprayer as described under (a). The lower surfaces of the leaves are then inoculated, up to 6 hours after treatment , with the test compound, by spraying with an aqueous suspension containing $10^5$ zoosporangia/ml. The inoculated plants are kept for 24 hours in a high humidity compartment, 5 days at glasshouse ambient temperature and humidity and then returned for a further 24 hours to high humidity. Assessment is based on the percentage of the leaf area covered by sporulation compared with that on control leaves.

c) Direct protectant activity against vine downy mildew (Plasmopara viticola; P.v.p)

The test is a direct protectant one using a foliar spray. The lower surfaces of leaves of whole vine plants (cv Cabernet Sauvignon) are sprayed at a dosage of 1 kilogram of active material per hectare using a track sprayer as described under (a), and after a subsequent 24 hours under normal glasshouse conditions the lower surfaces of the leaves are inoculated by spraying with an aqueous solution containing $10^4$ zoosporangia/ml. The inoculated plants are kept for 24 hours in a high humidity compartment, 5 days under normal glasshouse conditions and then returned for a further 24 hours to high humidity. Assessment is based on the percentage of leaf area covered by sporulation compared with that on control leaves.

d) Activity against apple powdery mildew (Podosphaera leucotricha; P.1)

The test is a direct anti-sporulant one using a foliar spray. The upper surfaces of leaves of whole apple seedlings are inoculated by spraying with an aqueous suspension containing $10^5$ conidia/ml 2 days prior to treatment with the test compound. The inoculated plants are immediately dried and kept at glasshouse ambient temperatures and humidity prior to treatment. The plants are sprayed at a dosage of 1 kilogram of active material per hectare using a track sprayer as described under a). After drying the plants are returned to a compartment at ambient temperature and humidity for up to 9 days, followed by assessment. Assessment is based on the percentage of the leaf area covered by sporulation compared with that on leaves of control plants.

e) Activity against wheat leafspot (Leptosphaeria nodorum; Ln.)

The test is a direct antisporulant one, using a foliar spray. Leaves of wheat plants (cv Mardler), at the single leaf stage, are inoculated by spraying with an aqueous suspension containing 8 x $10^5$ spores/ml. The inoculated plants are kept for 24 horus in a high humidity compartment prior to treatment. The plants are sprayed at a dosage 1kg. of active material per hectare using a track sprayer as described under (a). After drying, the plants are kept for 5 days under normal glass house conditions, followed by assessment. Assessment is based on the percentage of leaf area covered by sporulation compared with that on leaves of control plants.

The extent of disease control in all the above tests is expressed as a rating compared with a diluent sprayed control according to the criteria:-

0 = less than 50% disease control
1 = about 50-80% disease control
2 = greater then 80% disease control

Results of the above tests are given in Table II following:

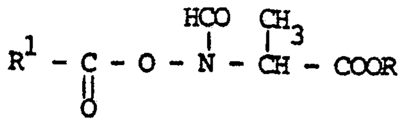

| Compound | | | Fungicidal Activity | | | | |
|---|---|---|---|---|---|---|---|
| Example | $R^1$ | R | Pva | Pvt | Pvp | Pl | In |
| 1 | $(CH_3)_3C$- | H | 2 | 2 | | | |
| 2 | $(CH_3)_3C$- | Na | 2 | 2 | | | |
| 3 | phenyl | H | 2 | 2 | | | |
| 4 | phenyl | Na | 2 | 2 | | | |
| 5 | benzyl | H | 1 | | 2 | | |
| 6 | $CH_3CH_2(CH_3)_2C$- | H | 2 | | 2 | | |
| 7 | p-nitrophenyl-amino | H | | | 2 | 1 | |
| 8 | methylamino | t-butyl | | | 1 | 2 | |
| 9 | methylamino | H | 1 | | 1 | | |
| 10 | cyclohexylamino | H | | | 1 | | |
| 11 | ethoxycarbonyl-methylamino | H | 1 | 1 | | | |
| 12 | methyl | H | 2 | | 2 | | |
| 13 | phenylamino | H | 2 | | 2 | | |
| 14 | 2-chlorophenyl-amino | H | 1 | | 2 | | |
| 15 | $(CH_3)_3C$- | $NH_3$-$CH(CH_3)_2$ | 2 | 2 | | | 1 |
| 16 | $(CH_3)_3C$- | benzyl | 1 | 2 | | | |
| 17 | cyclohexyl | H | 2 | 1 | | | |
| 18 | 2,4,6-tri-methylphenyl | H | | | | | 1 |
| 19 | $CH_3(CH_2)_{10}$- | H | 2 | 2 | | | |
| 20 | $CH_3(CH_2)_{14}$- | H | 1 | 2 | | | |
| 21 | $CH_3(CH_2)_{16}$- | H | | 2 | | | |
| 22 | $(CH_3CH_2)_2$-$(CH_3)C$= | H | | 2 | | | |

continued....

| Compound | | | Fungicidal Activity | | | | |
|---|---|---|---|---|---|---|---|
| Example | $R^1$ | R | Pva | Pvt | Pvp | Pl | Ln |
| 23 | $C_2H_5O.CO.(CH_2)_2$ | H | 2 | 2 | | | |
| 24 | $(ClCH_2(CH_3)_2C-$ | H | | 2 | | | |
| 25 | $(CH_3)_2C{=}CH-$ | H | 2 | 2 | | | |
| 26 | $(CH_3)_3C-$ | p-nitrobenzyl | 1 | 2 | | | |

## Claims

1. A fungicidal composition which comprises at least two carriers, at least one of which is a surface-active agent, and, as active ingredient, an N-acyl amino acid derivative of general formula

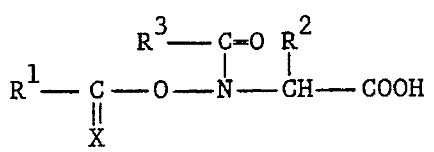

(I)

or a salt or ester thereof, wherein X represents an oxygen or sulphur atom, $R^1$ is an optionally substituted alkyl, alkenyl, cycloalkyl, aryl or aralkyl group or an optionally substituted alkylamino, cycloalkylamino, arylamino or aralkylamino group, $R^2$ is an optionally substituted alkyl, cycloalkyl or aryl group and $R^3$ is a hydrogen atom or an optionally substituted alkyl, cycloalkyl or aryl group.

2. A composition according to Claim 1 wherein $R^2$ is a methyl group.

3. A composition according to Claim 1 or 2 wherein $R^3$ is a hydrogen atom.

4. A composition according to any of Claims 1 to 3 wherein X is an oxygen atom.

5. A composition according to any of Claims 1 to 4 wherein $R^1$ is a $C_{1-20}$ alkyl or haloalkyl group, a $C_{2-10}$ alkenyl group, a $C_{3-8}$ alkoxycarbonylalkyl group, a $C_{3-8}$ cycloalkyl group or a phenyl or benzyl group optionally substituted by one or more substituents independently selected from $C_{1-4}$ alkyl, $C_{1-4}$ alkoxy, halogen and nitro moieties, or $C_{1-6}$ alkylamino group, a $C_{3-8}$ cycloalkylamino group, a phenylamino group optionally substituted by one or more substituents independently selected from $C_{1-4}$ alkyl, $C_{1-4}$ alkoxy, halogen and nitro moieties or a $C_{3-8}$ alkoxycarbonylalkylamino group.

6. A composition according to Claim 5 wherein $R^1$ is a $C_{1-10}$ alkyl or haloalkyl group wherein when the alkyl group contains 4 to 10 carbon atoms, the alpha-carbon atom is a tertiary carbon atom attached to the C=X group and three alkyl groups, or is a linear $C_{11-20}$ alkyl group, a $C_{2-8}$ alkenyl group, a cyclohexyl group, an ethoxycarbonylethyl group, a phenyl, trimethyl- phenyl or benzyl group, or a methylamino, cyclohexylamino, phenylamino, chloro- or nitrophenylamino or ethoxycarbonylmethylamino group.

**7.** A composition according to Claim 5 or 6 wherein $R^1$ is a $C_{1-5}$ alkyl group.

**8.** A composition according to any of Claims 1 to 7 in which the derivative of formula I is in the form of the free acid or the sodium salt.

**9.** A method of combating fungus at a locus, which comprises treating the locus with a derivative of the general formula I or a salt or an ester thereof as defined in any one of claims 1 to 8.

**10.** A method as claimed in Claim 9, in which the locus comprises plants subject or subjected to fungal attack, seeds of such plants or the medium in which the plants are growing or are to be grown.

**11.** A method as claimed in Claim 10, in which said plants are vines.

**12.** An N-acyl amino acid derivative of the general formula I or a salt or ester thereof in which X, $R^1$ and $R^2$ are as defined in Claim 1 and $R^3$ is a hydrogen atom or an optionally substituted cycloalkyl or aryl group.

**13.** A process for the preparation of a derivative of general formula I or a salt or ester thereof, as defined in Claim 12, which comprises reacting a compound of general formula

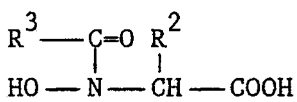 (II)

or a salt or ester thereof, wherein $R^2$ and $R^3$ are as defined in Claim 12, with a compound of formula

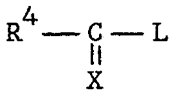 (III) or $R^4—N=C=X$ (IV)

wherein X is as defined in Claim 12, $R^4$ is an optionally substituted alkyl, cycloalkyl, aryl or aralkyl group and L is a suitable leaving group, and optionally converting the resulting acid, salt or ester into another acid, salt or ester, in known manner.

**Revendications**

**1.** Une composition fongicide qui comprend au moins deux véhicules, dont au moins un est un agent tensioactif, et, comme ingrédient actif, un dérivé d'acide aminé N-acylé de formule générale

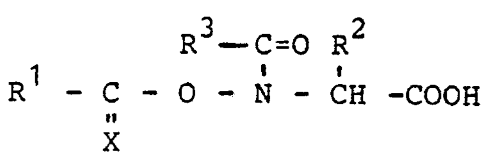 (I

ou un sel ou ester d'un tel composé, où X représente un atome d'oxygène ou de soufre, $R^1$ est un groupe alcoyle, alcényle, cycloalcoyle, aryle ou aralcoyle éventuellement substitué ou un groupe alcoylamino, cycloalcoylamino, arylamino ou aralcoylamino éventuellement substitué, $R^2$ est un groupe alcoyle, cycloalcoyle ou aryle éventuellement substitué et $R^3$ est un atome d'hydrogène ou un groupe alcoyle, cycloalcoyle ou aryle éventuellement substitué.

**2.** Une composition selon la revendication 1, dans laquelle $R^2$ est un groupe méthyle.

**3.** Une composition selon la revendication 1 ou 2, dans laquelle $R^3$ est un atome d'hydrogène.

**4.** Une composition selon l'une quelconque des revendications 1 à 3, dans laquelle X est un atome

d'oxygène.

**5.** Une composition selon l'une quelconque des revendications 1 à 4, dans laquelle $R^1$ est un groupe alcoyle ou haloalcoyle en $C_{1-20}$, un groupe alcényle en $C_{2-10}$, un groupe alcoxycarbonylalcoyle en $C_{3-8}$, un groupe cycloalcoyle en $C_{3-8}$ ou un groupe phényle ou benzyle éventuellement substitué par un ou plusieurs substituants choisis indépendamment parmi des groupes alcoyle en $C_{1-4}$, alcoxy en $C_{1-4}$, des halogènes et des portions nitro, ou un groupe $C_{1-6}$ alcoylamino, un groupe $C_{3-8}$ cycloalcoylamino, un groupe phénylamino éventuellement substitué par un ou plusieurs substituants choisis indépendamment parmi des groupes alcoyle en $C_{1-4}$, alcoxy en $C_{1-4}$, des halogènes et des portions nitro ou un groupe $C_{3-8}$ alcoxycarbonylalcoylamino.

**6.** Une composition selon la revendication 5, dans laquelle $R^1$ est un groupe alcoyle ou haloalcoyle en $C_{1-10}$ dans lequel, quand le groupe alcoyle contient 4 à 10 atomes de carbone, l'atome de carbone alpha est un atome de carbone tertiaire attaché au groupe C=X et à trois groupes alcoyle, ou est un groupe alcoyle en $C_{1-20}$ linéaire, un groupe alcényle en $C_{2-8}$, un groupe cyclohexyle, un groupe éthoxycarbonyle, un groupe phényle, triméthylphényle ou benzyle ou un groupe méthylamino, cyclohexylamino, phénylamino, chloro- ou nitrophénylamino ou éthoxycarbonylméthylamino.

**7.** Une composition selon la revendication 5 ou 6, dans laquelle $R^1$ est un groupe alcoyle en $C_{1-5}$.

**8.** Une composition selon l'une quelconque des revendications 1 à 7, dans laquelle le dérivé de formule I est sous la forme de l'acide libre ou du sel de sodium.

**9.** Une méthode de lutte contre les champignons en un lieu, qui comprend le traitement du lieu avec un dérivé de la formule générale I ou un sel ou ester d'un tel composé comme défini dans l'une quelconque des revendications 1 à 8.

**10.** Une méthode selon la revendication 9, dans laquelle le lieu comprend des plantes sensibles ou soumises à une attaque fongique, des semences de telles plantes ou le milieu dans lequel les plantes poussent ou doivent pousser.

**11.** Une méthode selon la revendication 10, dans laquelle les plantes sont des vignes.

**12.** Un dérivé d'acide aminé N-acylé de la formule générale I ou un sel ou ester d'un tel composé, où X, $R^1$ et $R^2$ sont tels que définis dans la revendication 1 et $R^3$ est un atome d'hydrogène ou un groupe cycloalcoyle ou aryle éventuellement substitué.

**13.** Un procédé pour la préparation d'un dérivé de formule générale I ou d'un sel ou ester d'un tel composé, comme défini dans la revendication 12, qui comprend la réaction d'un composé de formule générale

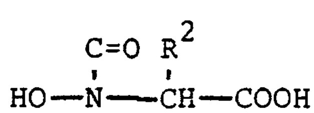

(II)

ou d'un sel ou ester d'un tel composé, où $R^2$ et $R^3$ sont tels que définis dans la revendication 12, avec un composé de formule

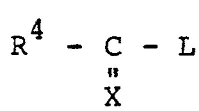

(III) ou $R^4 - N = C = X$ (IV)

où X est tel que défini dans la revendication 12, $R^4$ est un groupe alcoyle, cycloalcoyle, aryle ou aralcoyle éventuellement substitué et L est un groupe qui part approprié et éventuellement la conversion de l'acide ou du sel ou ester résultant en un autre acide, sel ou ester, de manière connue.

## Ansprüche

1. Fungizides Mittel, umfassend mindestens zwei Träger, von denen zumindest einer ein grenzflächenaktives Mittel ist, und als Wirkstoff ein N-Acylaminosäure-Derivat der allgemeinen Formel

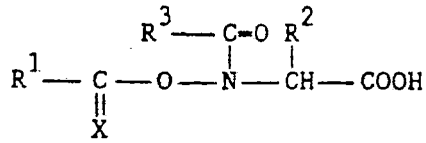

(I)

oder ein Salz oder einen Ester davon, wobei X ein Sauerstoff- oder Schwefelatom bedeutet, $R^1$ eine gegebenenfalls substituierte Alkyl-, Alkenyl-, Cycloalkyl-, Aryl- oder Aralkylgruppe oder eine gegebenenfalls substituierte Alkylamino-, Cycloalkylamino-, Arylamino- oder Aralkylaminogruppe ist, $R^2$ eine gegebenenfalls substituierte Alkyl-, Cycloalkyl- oder Arylgruppe und $R^3$ ein Wasserstoffatom oder eine gegebenenfalls substituierte Alkyl-, Cycloalkyl- oder Arylgruppe bedeutet.

2. Mittel nach Anspruch 1, wobei $R^2$ eine Methylgruppe ist.

3. Mittel nach Anspruch 1 oder 2, wobei $R^3$ ein Wasserstoffatom ist.

4. Mittel nach einem der Ansprüche 1 bis 3, wobei X ein Sauerstoffatom ist.

5. Mittel nach einem der Ansprüche 1 bis 4, wobei $R^1$ eine $C_1$-$C_{20}$-Alkyl- oder Halogenalkylgruppe, eine $C_2$-$C_{10}$-Alkenylgruppe, eine $C_3$-$C_8$-Alkoxycarbonylalkylgruppe, eine $C_3$-$C_8$-Cycloalkylgruppe oder eine Phenyl- oder Benzylgruppe bedeutet, gegebenenfalls substituiert durch einen oder mehrere Substituenten, unabhängig voneinander ausgewählt aus $C_1$-$C_4$-Alkyl-, $C_1$-$C_4$-Alkoxy-, Halogen- und Nitrogruppen, oder eine $C_1$-$C_6$-Alkylaminogruppe, eine $C_3$-$C_8$-Cycloalkylaminogruppe, eine Phenylaminogruppe, gegebenenfalls substituiert durch einen oder mehrere Substituenten, unabhängig voneinander ausgewählt aus $C_1$-$C_4$-Alkyl-, $C_1$-$C_4$-Alkoxy-, Halogen- und Nitrogruppen oder eine $C_3$-$C_8$-Alkoxycarbonylalkylaminogruppe.

6. Mittel nach Anspruch 5, wobei $R^1$ eine $C_1$-$C_{10}$-Alkyl- oder Halogenalkylgruppe ist, wobei, wenn die Alkylgruppe 4 bis 10 Kohlenstoffatome enthält, das $\alpha$-Kohlenstoffatom ein tertiäres Kohlenstoffatom ist, das gebunden ist an die C=X-Gruppe und drei Alkylgruppen, oder eine lineare $C_{11}$-$C_{20}$-Alkylgruppe, eine $C_2$-$C_8$-Alkenylgruppe, eine Cyclohexylgruppe, eine Ethoxycarbonylethylgruppe, eine Phenyl-, Trimethylphenyl- oder Benzylgruppe, oder eine Methylamino-, Cyclohexylamino-, Phenylamino-, Chlor- oder Nitrophenylamino- oder Ethoxycarbonylmethylaminogruppe bedeutet.

7. Mittel nach Anspruch 5 oder 6, wobei $R^1$ eine $C_1$-$C_5$-Alkylgruppe ist.

8. Mittel nach einem der Ansprüche 1 bis 7, wobei das Derivat der Formel I in Form der freien Säure oder des Natriumsalzes vorliegt.

9. Verfahren zur Bekämpfung von Pilzen an einer Stelle, umfassend die Behandlung der Stelle mit einem Derivat der allgemeinen Formel I oder einem Salz oder einem Ester davon, wie in einem der Ansprüche 1 bis 8 definiert.

10. Verfahren nach Anspruch 9, wobei die Stelle Pflanzen umfaßt, die von Pilzen befallen sind, Samen solcher Pflanzen oder das Medium, in dem die Pflanzen wachsen oder wachsen sollen.

11. Verfahren nach Anspruch 10, wobei die Pflanzen Weinstöcke sind.

12. N-Acylaminosäure-Derivat der allgemeinen Formel I oder ein Salz oder ein Ester davon, wobei X, $R^1$ und $R^2$ wie in Anspruch 1 definiert sind und $R^3$ ein Wasserstoffatom oder eine gegebenenfalls substituierte Cycloalkyl- oder Arylgruppe bedeutet.

13. Verfahren zur Herstellung eines Derivats der allgemeinen Formel I oder eines Salzes oder Esters

davon, wie in Anspruch 12 definiert, umfassend die Umsetzung einer Verbindung der allgemeinen Formel

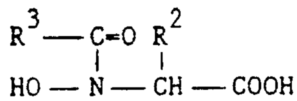

(II)

oder eines Salzes oder Esters davon, wobei $R^2$ und $R^3$ wie in Anspruch 12 definiert sind, mit einer Verbindung der Formel

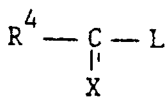

(III) oder $R^4-N=C=X$ (IV)

wobei X wie in Anspruch 12 definiert ist, $R^4$ eine gegebenenfalls substituierte Alkyl-, Cycloalkyl-, Aryl- oder Aralkylgruppe bedeutet und L eine geeignete austretende Gruppe ist, und gegebenenfalls Umwandlung der erhaltenen Säure, des Salzes oder Esters in eine andere Säure, ein anderes Salz oder einen anderen Ester auf bekannte Weise.